# EUROPEAN PATENT SPECIFICATION

(11) **EP 0 530 203 B1**
(45) Date of publication and mention of the grant of the patent: **01.06.1994**
(21) Application number: 91906848.6
(22) Date of filing: 14.03.1991
(51) Int. Cl.: E03F 5/20

(54) **IMPROVEMENT IN A SEWAGE SYSTEM**
VERBESSERUNG BEI EINEM ABWASSERSYSTEM
AMELIORATION APPORTEE A UN SYSTEME D'EGOUTS

(30) Priority: 15.03.1990 SE 9000921
(43) Date of publication of application: 10.03.1993
(73) Proprietor: Nilsson, Peter, S-270 44 Brösarp (SE); Olsson, Eskil, 114 52 Stockholm (SE)
(72) Inventor: Nilsson, Peter, S-270 44 Brösarp (SE); Olsson, Eskil, 114 52 Stockholm (SE)
(74) Representative: Petri, Stellan
(86) International application number: SE9100194
(87) International publication number: WO9114054

(56) References cited:
- US-A- 1 120 351
- US-A- 2 078 260
- DK 42587

## Description

The invention relates to an improvement in a sewage system comprising a sedimentation chamber, a liquid chamber, an inlet conduit connected to the sedimentation chamber, and a siphon in the liquid chamber, said siphon being connected to an outlet conduit.

Waste water from households contains, besides water, also solid particles and sludge. The existence of particles and sludge means that the sewers must be given larger dimensions than otherwise would be necessary. In order to ensure that the sewers will not get clogged, it is also necessary to use relatively large quantities of water, and to provide for the sewers a relatively large slope. Many countries are short of water, and in the developing countries and in other places, where housing areas are built up quickly and partly unplanned, it can be very difficult and expensive to construct sewer systems of the above-mentioned type. Also in larg kitchen establishments, such as restaurants and food factories, problems with clogging of sewers occur. The presently most occurring sewer systems are based on the sewers being arranged for flow by gravity. Such systems can work very well initially with good run off ability but due to settling in the ground and for other practical reasons, the runoff ability eventually deteriorates with following increased risk for clogging.

In order to minimize the risk for clogging, systems which are based on overpressure or vacuum in the sewers are used today, but such systems are very expensive and comprise many components which impair the reliability and increase the maintenance costs.

By separating sludge, objects and particles from the waste water as near as possible to the place of origin of the waste water the problems mentioned above can be reduced, since the sewers primarily will be transporting liquid. Separating the sludge can also imply other great advantages, because in many cases said sludge can be re-used in different ways.

Such an early separation is disclosed in US-A 4,100,073, wherein a sewage system with several tanks is used. Sludge and the like is separated in a first tank by the inlet and outlet conduits being connected at a high level in the tank, and by the sludge sinking to the bottom of the tank so that it will not be carried by the water to a dosage tank downstream of the first tank. In the dosage tank a siphon is provided, which gives off water in fixed doses to following sewers and systems. The siphon is provided at opening thereof facing upwards with a cover in the form of a floating body, wherein said body opens for discharge of liquid when a certain level has been reached in the dosage tank, and closes again when the liquid has sunk to a predetermined level.

The use of the siphon principle for reduction or limitation of the flow from a well or the like is known from several patent specifications. Such a use is shown and described inter alia in SE-B- 223,681 and SE-B- 370,430.

A problem which has not been considered completely when siphons are used in connection with constructions of the above mentioned type, is the occurrence of objects which are suspended or floating in the waste water. There is a great risk that such objects will be carried into the suction pipe of the siphon and, if the worst comes to the worst, stop the discharge of water. If the objects pass through the siphon there is instead a great risk that the objects collect in the outlet sewer, especially if the flow in the sewer is low and has small dimensions.

One object of the present invention is to substantially overcome the above mentioned problem of clogging of siphon and sewers. Moreover, according to the invention this shall be effected by a smaller inflow of the waste water to the sedimentation tank and at smaller dimensions of the sewers than are usually required.

This object is achieved by the invention having obtained the characterizing features of claim 1.

The invention will be further explained by way of illustrative embodiments, reference being made to the accompanying drawings, in which
FIG 1 shows a system according to the present invention, and
FIG 2 is an explanatory drawing showing the system according to the invention used within a special field of application.

The system according to the invention comprises a sedimentation chamber 10 and a liquid chamber 11 which both form part of a tank 14. The chambers 10,11 are separated by a partition wall 16 and are interconnected by an opening 15 which is provided in the partition wall 16. At the top of the sedimentation chamber 10 in the tank 14 an inlet conduit 21 is connected, through which waste water is supplied. The waste water contains particles and more or less solid objects. These are either heavier than the water and then fall down and are collected on the bottom of the sedimentation chamber 10, or lighter than water, and then remain floating close to or on the surface of the water in the sedimentation chamber. In the upper part of the liquid chamber 11 a flow amplifier constructed as a siphon 13 is provided, forming an inverted U. An outlet pipe 19 is provided between the two limbs, a first limb 17 and a second limb 18, of the U, which are open at the bottom end thereof and function as suction pipes. The outlet pipe 19 is connected by a horizontal section 22 to an outlet conduit 12. The cross sectional area of the outlet conduit 12 is considerably larger than the cross sectional area of the limbs and the outlet pipe of the siphon. In a preferred embodiment the outlet conduit and the pipes of the siphon have circular cross section, the diameter of the conduit being 75 mm and of the pipe of the siphon 50 mm. The first limb 17 of the siphon has its opening below the outlet conduit 12, and said second limb 18 of the siphon has its opening above the outlet conduit 12. Said other limb comprises an opening portion 20 at the lower, free end thereof, said opening portion having a cross sectional area which considerably exceeds the cross sectional area of said first limb 17 at the opening thereof. The function of the device will be described in more detail below.

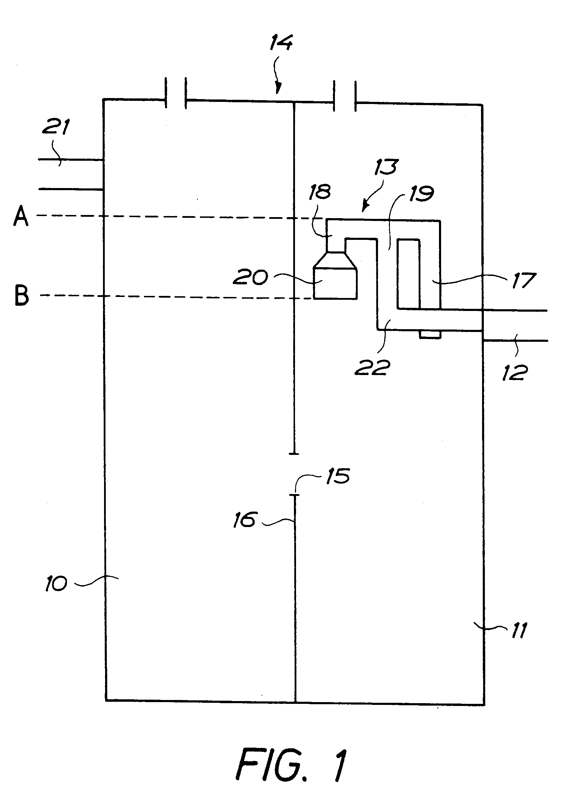

When the water supplied through the inlet conduit 21 has reached such a volume in the sedimentation chamber 10 that the water surface is at the same level as the opening 15, water will flow also into the liquid chamber 11. In order to ensure that as few sedimentation particles as possible will be carried into the liquid chamber, the opening should be located at approximately half the average water depth in the tank 14. If additional water is supplied, the liquid levels in the two chambers will rise jointly. During any normal operation of the device, liquid will be transferred from the sedimentation chamber to the liquid chamber 11 at a level below the liquid surface. Floating objects and other things that have been collected on the liquid surface in the sedimentation chamber 10 are thus prevented from passing into the liquid chamber 11. When the liquid level rises also the limbs will be filled gradually with water from below, starting with the first limb 17. When the level finally reaches the uppermost level of the siphon, indicated at A in Fig 1, the siphon will be operated. It should be noted here that level A is below the inlet conduit 21. Thus, the risk for objects collected on the surface to clog the inlet conduit 21 and to prevent the waste water from coming into the sedimentation chamber 10 is decreased. When the siphon is operating, water will be pressed through the limbs of the siphon, a major portion passing through said first limb 17 opening at a deeper level. The flow from the outlet pipe of the siphon, which is narrower than the sewer, is so large that the sewer will be filled almost completely. By this flow amplification in the siphon, the sewer will be flushed clean from occurring objects, if any, and any tendency of clogging will be prevented. When the liquid surface in the liquid chamber 11 has sunk to the lowermost level of the opening portion 20, indicated in Fig 1 at B, air will be sucked into the opening portion and the limb 18 connected thereto. Thus, the drainage function of the siphon will be interrupted, and air will again fill said second limb 18 and the outlet pipe 19 of the siphon. Said first limb 17 will, however, maintain the liquid surface at the level B which is the lowermost level occurring in the liquid chamber 11 under normal conditions. The large diameter, 100 mm in the shown example, of the opening portion 20 results in the suction function of the siphon being interrupted very quickly. Level B should be above, at least 15 mm above, the horizontal portion 22 of the outlet pipe in order to achieve a ratio as favourable as possible between the outflow from the outlet conduit 12 and the minimum flow into the inlet conduit, which is required in order that the siphon will start in the desired way. In a practical experiment the tank 14 was provided as a pipe with the diameter 1500 mm. The siphon 13 was constructed to have level A 260 mm above and level B 20 mm above the outlet conduit 12. These dimensions resulted in an outflow through the outlet conduit 12 of 1.90 l/s at a starting flow of 0.1 l/s, that is, the minimum flow into the inlet conduit 21, which starts the siphon 13. The large outflow obtained will lower the water level in the liquid chamber 11 from level A to level B in less than two minutes, while the refilling time to reach level A again, is more than 200 minutes under normal conditions. This makes an effective separation and retention of the contaminations of the wastewater possible.

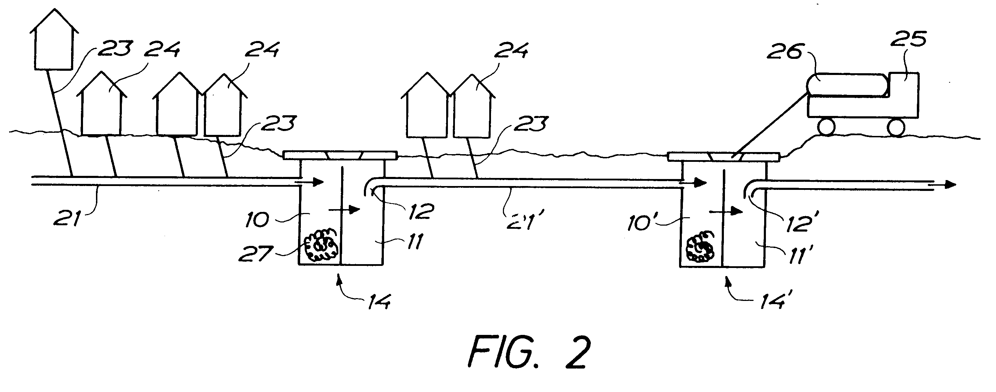

The application of the device according to the invention as shown in Fig 2 comprises two tanks 14 and 14′ which are arranged one after the other. A first inlet conduit 21 receives waste water from the house 24 through the sewer 23. The wastewater which contains solid particles and objects is lead into the sedimentation chamber 10 of the first tank. The sewage device then functions in the above described way, and water is pressed out from the siphon and the outlet conduit 12 of the tank at varying intervals. The outlet conduit 12 merges into an inlet conduit 21′ of a following tank 14′. Houses 24 are connected also to this inlet conduit through sewers 23. Since the flow from the first tank 14 is very large, the slope of the conduits can be very small or does not even exist along certain sections, despite further waste water being supplied along the conduit. The low requirement of slope also results in the conduits lying at a substantially smaller depth than in conventional sewage systems. Thus, the required work of digging and the costs connected therewith will be decreased. The second tank 14′ functions in the same way as the first tank and additional tanks can be provided.

The best function and effect of the sewage system are achieved if the total diameter of the tank 14 ranges between 0.6 and 2.5 m. Inlet and outlet are provided such that the mean water level in the tank ranges between 1.2 and 3.5 m. The sedimentation tank should occupy between 50% and 70% of the total volume of the tank.

Particles and objects entering the tank 14 sink to the bottom of the sedimentation chamber 10 to form a layer 27, and this layer must be removed from said chamber at certain intervals. Suitably, a truck 25 or the like is then used, which is provided with some sort of sludge exhauster 26. Also objects floating in the tank are suitably removed at these occasions. The construction of the tank also makes it possible to drain automatically by means of a vacuum or overpressure unit.

The very compact embodiment of the system according to the invention facilitates to a high degree in the described field of application, but the system is also very effective in other fields of application. For example, the system is directly applicable in plants for food production and the like, for example large scale kitchens and food industry, where large amounts of water soaked waste occur.

## Claims

1. A sewage system comprising a sedimentation chamber (10), a liquid chamber (11) and an inlet conduit (21) connected to the sedimentation chamber (10), and a flow amplifier constructed as a siphon (13) provided in the liquid chamber, connected to an outlet pipe (12), said siphon being constructed in order to flush a predetermined volume of water out of the tank (14) at a predetermined liquid level in the tank (14), **characterized** in that the siphon (13) is constructed as an inverted U with a first limb (17) opening at the bottom end thereof below the connection between the outlet conduit (12) and the siphon (13), and a second limb (18) open at the bottom end thereof above the level of the opening of the first limb (17) and above the connection between the siphon (13) and the outlet conduit (12), the limbs functioning as suction pipes, that an outlet pipe (19) extending from the limbs is connected to the upper portions of the limbs and that said second limb (18) at the free end thereof comprises an opening portion (20) the cross sectional area of which substantially exceeds the cross sectional area of the opening of the first limb (17).

2. A system according to claim 1, **characterized** in that the inlet conduit (21) is connected to the sedimentation chamber (10) at a level above the highest level of the siphon (13).

3. A system according to claim 1 or 2, **characterized** in that the cross sectional area of the outlet conduit (12) is larger than the cross sectional area of the limbs (17;18).

4. A system according to any of claims 1-3, **characterized** in that the sedimentation chamber (10) and the liquid chamber (11) are provided in a common tank (14) and are separated by a partition wall (16) forming at least one opening (15).

## Patentansprüche

1. Abwassersystem, umfassend eine Absetzkammer (10), eine Flüssigkeitskammer (11) und eine an die Absetzkammer (10) angeschlossene Einlaßleitung (21) sowie einen als Siphon (Heberrohr) (13) ausgebildeten, in der Flüssigkeitskammer vorgesehenen, mit einem Auslaßrohr (12) verbundenen Strömungsverstärker, wobei der Siphon ausgebildet ist zum Austreiben eines vorbestimmten Volumens an Wasser aus dem Tank (14), wenn im Tank (14) ein vorbestimmter Flüssigkeitsspiegel vorliegt, dadurch **gekennzeichnet**, daß der Siphon (13) mit einer umgekehrten U-Form mit einem ersten Schenkel (17), der an seinem unteren Ende unterhalb der Verbindung zwischen der Auslaßleitung (12) und dem Siphon (13) offen ist, und mit einem zweiten Schenkel (18), der an seinem unteren Ende oberhalb des Pegels oder der Höhenlage der Öffnung des ersten Schenkels (17) und oberhalb der Verbindung zwischen dem Siphon (13) und der Auslaßleitung (12) offen ist, ausgebildet ist, wobei die Schenkel als Saugrohre wirken, daß ein von den Schenkeln abgehendes Auslaßrohr (19) mit den oberen Abschnitten der Schenkel verbunden ist und daß der zweite Schenkel (18) an seinem freien Ende einen Öffnungsabschnitt (20) aufweist, dessen Querschnittsfläche wesentlich größer ist als die Querschnittsfläche der Öffnung des ersten Schenkels (17).

2. System nach Anspruch 1, dadurch gekennzeichnet, daß die Einlaßleitung (21) in einer Höhenlage oberhalb der höchsten Höhenlage des Siphons (13) an die Absetzkammer (10) angeschlossen ist.

3. System nach Anspruch 1 oder 2, dadurch gekennzeichnet, daß die Querschnittsfläche der Auslaßleitung (12) größer ist als die der Schenkel (17; 18).

4. System nach einem der Ansprüche 1 bis 3, dadurch gekennzeichnet, daß die Absetzkammer (10) und die Flüssigkeitskammer (11) in einem gemeinsamen Tank (14) vorgesehen und durch eine Trennwand (16) mit mindestens einer Öffnung (15) voneinander getrennt sind.

## Revendications

1. Système de tout-à-l'égout comprenant une chambre de sédimentation (10), une chambre de liquide (11), un conduit d'entrée (21) connecté à la chambre de sédimentation (10), et un amplificateur de débit construit sous la forme d'un siphon (13) prévu dans la chambre de liquide, connecté à un conduit de sortie (12), ce siphon étant réalisé de manière à chasser un volume d'eau prédéterminé à l'extérieur de la cuve (14), à un niveau prédéterminé du liquide dans cette cuve (14), caractérisé en ce que le siphon (13) est construit avec la forme d'un U inversé comportant une première branche (17) débouchant, à son extrémité inférieure, en dessous du raccordement entre le conduit de sortie (12) et le siphon (13), et une seconde branche (18) débouchant, à son extrémité inférieure, au-dessus du niveau de l'orifice de la première branche (17) et au-dessus du raccordement entre le siphon (13) et le conduit de sortie (12), les branches fonctionnant en tant que tuyaux d'aspiration, en ce qu'un tuyau de sortie (19) s'étendant à partir des branches est relié aux portions supérieures de ces branches et en ce que la seconde branche (18) comprend, à son extrémité libre, une embouchure (20) ayant une aire de section transversale qui dépasse notablement l'aire de la section transversale de l'orifice de la première branche (17).

2. Système suivant la revendication 1 caractérisé en ce que le conduit d'entrée (21) est connecté à la chambre de sédimentation (10) à un niveau situé au-dessus du niveau le plus haut du siphon (13).

3. Système suivant l'une quelconque des revendications 1 ou 2 caractérisé en ce que l'aire de la section transversale du conduit de sortie (12) est plus grande que l'aire de la section transversale des branches (17,18).

4. Système suivant l'une quelconque des revendications 1 à 3 caractérisé en ce que la chambre de sédimentation (10) et la chambre de liquide (11) sont prévues dans une cuve commune (14) et elles sont séparées par une cloison de séparation (16) formant au moins une ouverture (15).
